## Europäisches Patentamt
## European Patent Office
## Office européen des brevets

(11) Veröffentlichungsnummer: **0 104 361**
**A1**

(12) **EUROPÄISCHE PATENTANMELDUNG**

(21) Anmeldenummer: 83107523.9

(22) Anmeldetag: 30.07.83

(51) Int. Cl.³: **G 05 D 23/19**
**F 24 D 19/10**

(30) Priorität: 28.08.82 DE 8224609 U

(43) Veröffentlichungstag der Anmeldung:
04.04.84 Patentblatt 84/14

(84) Benannte Vertragsstaaten:
AT BE CH DE FR GB IT LI LU NL SE

(71) Anmelder: Joh. Vaillant GmbH u. Co
Berghauser Strasse 40 Postfach 10 10 20
D-5630 Remscheid 1(DE)

(72) Erfinder: Stuch, Dieter
Hilfringhauser Strasse 95
D-5632 Wermelskirchen(DE)

(74) Vertreter: Heim, Johann-Ludwig
c/o Joh. Vaillant GmbH u. Co Postfach 10 10 20
Berghauser Strasse 40
D-5630 Remscheid 1(DE)

(54) Verfahren zum Steuern der Schnellaufheizung.

(57) Die vorliegende Erfindung bezieht sich auf ein Verfahren zum Steuern der Schnellaufheizung eines Raumes mit einm von einer Wärmequelle gespeisten Heizkörper im Raum und besteht darin, daß auf den Sollwert der Temperatur des Heizkörpers ein Festwert aufgeschlagen wird und daß die Zeitdauer des Voreinschaltens der Wärmequelle auf den neuen Sollwert nach der Beziehung

$$t = -\tau \ln\left(1 - \frac{R}{R\ddot{U} - R}\right)$$

ermittelt wird, wobei $\tau$ die Zeitkonstante, $\nu_R$ ein konstanter Raumtemperaturwert und $\nu_{R\ddot{U}} - \nu_{RS}$ eine Temperaturdifferenz darstellen.

Fig 2

Joh. Vaillant GmbH u. Co

EP 920

1. August 1983

- 1 -

## Verfahren zum Steuern der Schnellaufheizung

Die vorliegende Erfindung bezieht sich auf ein Verfahren zum Steuern der Schnellaufheizung eines Raumes gemäß dem Oberbegriff des Hauptanspruchs.

Normalerweise wird beim Schnellaufheizen eines Raumes so vorgegangen, daß die Leistung der Wärmequelle auf ein Maximum geschaltet wird und der Zeitpunkt geschätzt wird, zu dem die Wärmequelle mit der erhöhten Leistung in Betrieb gehen muß.

Es ist weiterhin üblich, zu einer bestimmten Zeit, die ausreichend vor der gewünschten Zeit liegt, die Anlage zur Schnellaufheizung auf einen erhöhten Sollwert zu schalten.

- 2 -

**0104361**

Beide Verfahren haben den Nachteil, daß Sie nicht optimal arbeiten. Bei einer fest vorgegebenen Zeit kann es sein, daß die Zeit einmal nicht ausreicht, um den Raum bereits auf der neuen Solltemperatur zu haben, zum anderen ist es auch möglich, daß der Raum seine erhöhte Solltemperatur vor der gewünschten Zeit erreicht, was zur Energievergeudung führt. Das Aufheizen eines Raumes mit einer Heizungsanlage, mit deren maximal möglicher Leistung ist aber für den Benutzer mit Komforteinschränkungen verbunden, die sich einmal aus den Spannungsgeräuschen der Heizungsanlage und aus dem Takten der Wärmequelle ergeben, wenn die, wie in der Regel üblich, mit einem Zweipunktregler versehen ist. Besonders verstärkt treten diese Probleme in der Übergangszeit auf, also einer Zeit, in der der Heizungsanlage ohnehin nicht eine hohe Leistung abverlangt wird.

Der vorliegenden Erfindung liegt die Aufgabe zugrunde, den Zeitpunkt des Beginns der Schnellaufheizung möglichst optimal zu ermitteln, wobei einerseits unter dem Gesichtspunkt der Energieeinsparung, andererseits aber auch unter dem Gesichtspunkt des Komforts für Benutzer gehandelt werden soll.

Die Lösung dieser Aufgabe ergibt sich aus den kennzeichnenden Merkmalen des Hauptanspruchs.

Weitere Ausgestaltungen und besonders vorteilhafte Weiterbildungen der Erfindung sind Gegenstand der Unteransprüche, beziehungsweise gehen aus der nachfolgenden Beschreibung her-

0104361

vor, die ein Ausführungsbeispiel der Erfindung zum Inhalt
hat.

Es bedeuten Figur eins eine Prinzipdarstellung einer Heizungsanlage mit einer Steuerung und Figur zwei ein Diagramm.

In beiden Figuren bedeuten gleiche Bezugszeichen jeweils die
gleichen Einzelheiten. Die Heizungsanlage in Figur eins weist
eine Wärmequelle 1 auf, die aus einem Wärmetauscher 2 und
einem ihn beheizenden Brenner 3 besteht, der über eine mit
einem Magnetventil 4 versehene Brennstoffzuleitung 5 mit Energie versorgt wird. Der Wärmetauscher 2 ist mit einer mit einer Umwälzpumpe 6 versehenen Rücklaufleitung 7 verbunden,
ihm wird heißes Wasser über eine Vorlaufleitung 8, die an
wenigstens einen Radiator 9 angeschlossen ist, abgeführt.
Der Radiator ist im Innenraum 10 eines beliebigen Raumes 11
eines nicht weiter dargestellten Gebäudes angeordnet, in ihm
ist ein Temperaturfühler 12 vorgesehen, der über eine Meßleitung 13 mit einer Steuerung 14 verbunden ist. An der Steuerung 14 sind zwei Sollwertsteller 15 und 16 angeordnet, die
über entsprechende Leitungen 17 und 18 mit der Steuerung verbunden sind. Die Steuerung 14 gibt Stellgrößen über eine Ausgangsleitung 19, einmal auf das Magnetventil 4 und auf den
nicht weiter dargestellten Antriebsmotor der Umwälzpumpe 6.
Bei dem Magnetventil 4 kann es sich um ein Proportionalventil oder auch um ein taktendes Ventil handeln.

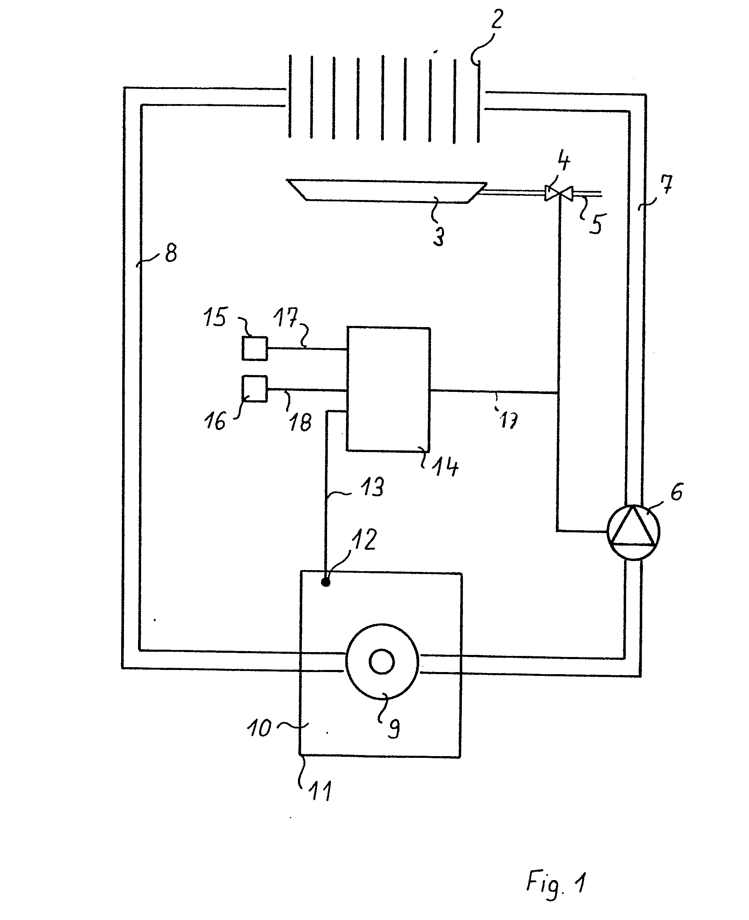

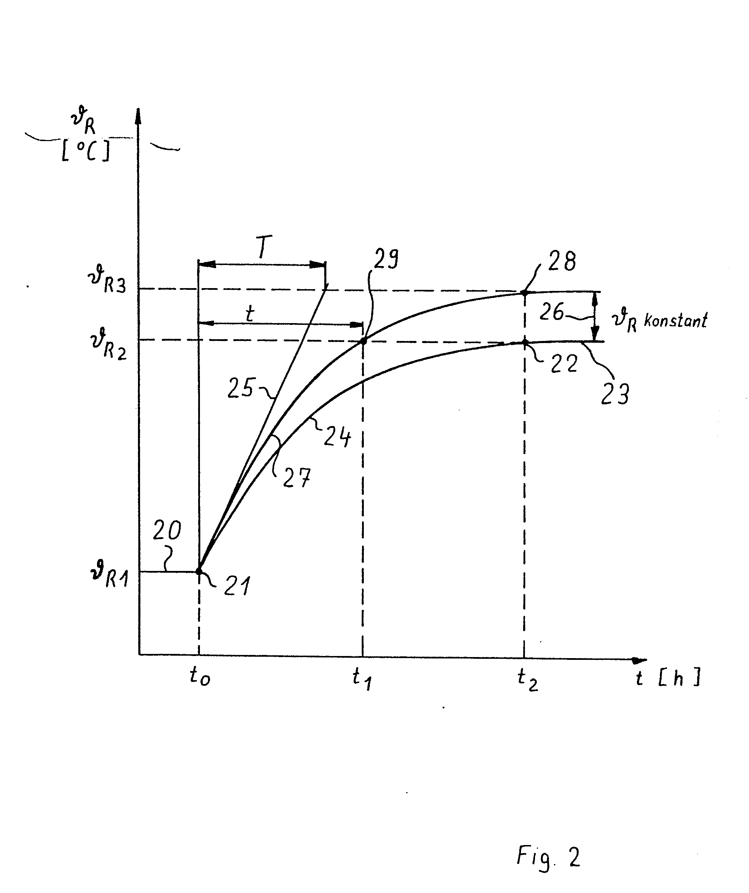

Die Funktion der Steuerung wird nun anhand der Figur zwei näher erläutert.

In dem Diagramm der Figur zwei ist in der Abszisse die Zeit in Stunden, in der Ordinate die Raumtemperatur in °C aufgetragen. Die Heizungsanlage befindet sich im Zustand der Nachtabsenkung, d. h., vor einem Zeitpunkt $t_o$ ist eine abgesenkte Raum-Ist-Temperatur $\vartheta_{R1}$ bereits vorhanden, die von dem Fühler 12 gemessen und über die Leitung 13 der Steuerung 14 eingegeben werden kann. Dieser Beharrungszustand entspricht dem Kurvenstück 20, und zwar bis zum Punkt 21, z. Z. $t = t_o$. Die Steuerung soll nun so ausgebildet sein, daß zu einem Zeitpunkt $t_2$ ein erhöhter Raumtemperatur-Sollwert $\vartheta_{R2}$ erreicht sein soll, so daß von Punkt 22 an der Raumtemperatur-Sollwert gemäß dem Kurvenstück 23 vorgegeben werden soll. Es versteht sich, daß den Raumtemperatur-Sollwerten $\vartheta_{R2}$, $\vartheta_{R3}$ bestimmte Vorlauf- oder Rücklauftemperaturwerte oder Mitteltemperaturwerte der Vorlauftemperatur und der Rücklauftemperatur der Heizungsanlage zugeordnet sind, um bei gegebenen physikalischen Bedingungen des Radiators 9 die entsprechende Raum-Ist-Temperatur zu erzielen.

Würde man die Vorlauftemperatur in der Leitung 8 zwischen den Punkten 21 und 22 so steuern, daß sich eine erste Kurve 24 ergäbe, so bedeutet das, daß bei einer vorgegebenen Anfangssteigerung 25 der Raumtemperatur ein Wert von etwa 5 Perioden $\tau$ benötigt wird, um von dem Wert $\vartheta_{R1}$ auf den Wert $\vartheta_{R2}$ zu kommen. Dieser Zeitraum ist entschieden zu lang. Die Erfindung geht nun davon aus, daß zu der erhöhten Raumtemperatur eine Vorlauftemperatur gehört, die niedriger ist als die maximal mit der Heizungsanlage erzielbare Vorlauftemperatur. Somit besteht die Erfindung darin, daß auf den neuen Raumtemperatur-Sollwert $\vartheta_{R2}$ ein Festwert $\vartheta_R$ konst. aufgeschlagen wird, der der Länge der Strecke 26 entspricht. Für die Schnellaufheizung wird demgemäß von der Steuerung 14 ein Vorlauftemperatur-Sollwert vorgetäuscht, der um eine entsprechende Konstante gleichermaßen höher liegt, wobei diese Konstante größer als die Konstante $\vartheta_R$ konst. ist. Damit fährt die Steuerung statt der Kurve 24 eine Kurve 27 gleicher Krümmung und gleicher Anfangssteigung. Die Kurve 27 geht wie die Kurve 24 von Punkt 21 aus, mündet aber nicht in den Punkt 22, sondern in einen Punkt 28, so daß zum Zeitpunkt $t_2$ der Raumtemperatur-Sollwert $\vartheta_{R3}$ erreicht sein würde. Das bedeutet, daß die Kurve 27 den Raumtemperatur-Sollwert $\vartheta_{R2}$, der eigentlich erreicht werden soll, bereits im Zeitpunkt $t_1$, das ist im Punkt 29 erreicht. Dieser Zeitpunkt wird bereits nach $< 5$ Perioden $\tau$ erreicht. Dieser Zeitpunkt bedeutet aber, daß die Heizungsanlage den ursprünglichen gewünschten Raumtemperatur-Sollwert $\vartheta_{R2}$ erreicht.

Nun kann die Zeit ermittelt werden, die zwischen den Zeitpunkten $t_0$ und $t_1$ liegt; um diesen Zeitbetrag, rückwärts vom Zeitpunkt $t_2$ an gerechnet, muß die Heizungsanlage auf den erhöhten beziehungsweise überhöhten Raumtemperatur-Sollwert geschaltet werden, damit zum ursprünglichen gewünschten Zeitpunkt ein Raumtemperatur-Sollwert $\vartheta_{R2}$ für die Heizungsanlage gilt. Hieraus lassen sich reproduzierbare und für jede Heizungsanlage beziehungsweise jede Steuerung oder Regelung gleiche Vorgabebedingungen ermitteln, so daß lediglich unter Berücksichtigung der für die besondere Heizungsanlagensteuerung oder -regelung geltenden Werte der Einschaltzeitpunkt für die Schnellaufheizung ermittelt werden kann.

Für den Fall, daß eine entsprechende dem überhöhten Raumtemperatur-Sollwert $\vartheta_{R3}$ entsprechende Vorlauftemperatur $\vartheta_{V3}$ nicht eingestellt werden kann, weil bereits die zu der niedrigeren Raumtemperatur $\vartheta_{R2}$ zugehörige Vorlauftemperatur $\vartheta_{V2}$ so hoch liegt, daß die Überhöhungsdifferenz nicht mehr zustande kommen kann, dann arbeitet die Steuerung so, daß noch die mögliche Raumtemperatur-Sollwerterhöhung beziehungsweise Vorlauftemperaturerhöhung genommen wird und als neuer Sollwert der Heizungsanlage aufgeschaltet wird. Die Zeitdauer des Einschaltens dieses Sollwertes wird nach derselben Methode ermittelt.

Die Kurven 24 und 27 sind in erster Näherung e-Funktionen gemäß Gleichung (1).

$$(1) \qquad x = \frac{1}{x} \left( 1 - e^{-\frac{t}{\tau}} \right)$$

Bezogen auf den hier interessierenden Raumtemperaturwert und umgeformt nach t lautet die Gleichung wie folgt, (2),

$$(2) \qquad t = - \tau \ln \left( 1 - \frac{\vartheta_R}{\vartheta_{R\ddot{u}} - \vartheta_R} \right)$$

worin t die Zeit bedeutet, innerhalb der der neue Raumtemperatur-Soll-wert erreicht ist, beziehungsweise anders formuliert, um die die Heizungsanlage früher eingeschaltet werden muß, $\tau$ die Zeitkonstante, $\vartheta_{\bar{R}}$ der Raumtemperatur-Istwert und $\vartheta_{R\ddot{u}}$ der Raumtemperatur-Überhöhungssollwert. Es zeigt sich, daß die Steuerung 14 nicht nach der Gleichung (2) ohne weiteres ausgelegt werden kann, da die Verarbeitung eines natürlichen Logarithmus, einer Division, einer Differenzbildung und einer Multiplikation nicht ohne weiteres möglich ist.

Aus diesem Grunde wurden Überlegungen angestellt, wie die Gleichung (2) geändert werden kann, um eine bessere Verarbeitung der Werte zu bekommen. Hierbei wird zunächst das Vorzeichen in die Klammer hineingezogen und der Ausdruck wurde durch $\tau$ dividiert. Man kann davon ausgehen, daß die dadurch erhaltene Gleichung dieselbe Bedeutung besitzt wie die Gleiung

(3) $\quad y = \ln ( 1 + z )$

somit ergibt sich Gleichung

(4) $\quad y = \dfrac{t_D}{\tau} = \ln \left( 1 + \dfrac{\vartheta_{RS} - \vartheta_R}{\vartheta_{R\ddot{u}} - \vartheta_{RS}} \right)$

worin $\vartheta_{RS}$ der Temperatur-Sollwert, $\vartheta_R$ der Raumtemperatur-Istwert und $\vartheta_{R\ddot{u}}$ der Raumtemperatur-Überhöhungssollwert sind. Nun gilt allgemein, daß man eine Gleichung (4)

angenähert auch wie folgt schreiben kann, Gleichung

(5) $\quad y \approx a \dfrac{z - b}{z - c}$

Somit gelten für Werte von $y = y_1$ , $y_2$ $y_3$ wie folgt Gleichungen (6), (7), (8):

(6) $\quad y_1 = a \dfrac{z_1 - b}{z_1 - c}$

(7) $\quad y_2 = a \dfrac{z_2 - b}{z_2 - c}$

(8) $\quad y_3 = a \dfrac{z_3 - b}{z_3 - c}$

Gleichungen (6 - 8) können nach a wie folgt umgestellt werden

(9)

$$a = \frac{\dfrac{y_1 z_1 - y_2 z_2}{y_1 - y_2} - \dfrac{y_2 z_2 - y_3 z_3}{y_2 - y_3}}{\dfrac{z_1 - z_2}{y_1 - y_2} - \dfrac{z_2 - z_3}{y_2 - y_3}}$$

und die Beziehungen gemäß 6 - 8 können nach b wie folgt auf gelöst werden

(10)

$$b = \frac{\dfrac{\dfrac{1}{y_1} z_1 - \dfrac{1}{y_2} z_2}{z_1 - z_2} - \dfrac{\dfrac{1}{y_2} z_2 - \dfrac{1}{y_3} z_3}{z_2 - z_3}}{\dfrac{\dfrac{1}{y_1} - \dfrac{1}{y_2}}{z_1 - z_2} - \dfrac{\dfrac{1}{y_2} - \dfrac{1}{y_3}}{z_2 - z_3}}$$

Ebenso kann nach c aufgelöst werden, dann ergibt sich Gleichung

(11)

$$c = \frac{\dfrac{y_1 z_1 - y_2 z_2}{z_1 - z_2} - \dfrac{y_2 z_2 - y_3 z_3}{z_2 - z_3}}{\dfrac{y_1 - y_2}{z_1 - z_2} - \dfrac{y_2 - y_3}{z_2 - z_3}}$$

das heißt, der Wert c ist in Werten von y und z ausgedrückt.

Setzt man die Werte von a gemäß Gleichung 9, b gemäß Gleichung 10 und c gemäß Gleichung 11 in die Gleichungen 6, 7 und 8 ein, so erhält man nach Umformung Gleichung

(12)

$$y \approx \frac{\dfrac{y_1 z_1 - y_2 z_2}{y_1 - y_2} - \dfrac{y_2 z_2 - y_3 z_3}{y_2 - y_3}}{\dfrac{z_1 - z_2}{y_1 - y_2} - \dfrac{z_2 - z_3}{y_2 - y_3}} \cdot \frac{z - \dfrac{\dfrac{\frac{1}{y_1 z_1} - \frac{1}{y_2 z_2}}{z_1 - z_2} - \dfrac{\frac{1}{y_2 z_2} - \frac{1}{y_3 z_3}}{z_2 - z_3}}{\dfrac{\frac{1}{y_1} - \frac{1}{y_2}}{z_1 - z_2} - \dfrac{\frac{1}{y_2} - \frac{1}{y_3}}{z_2 - z_3}}}{z - \dfrac{\dfrac{y_1 z_1 - y_2 z_2}{z_1 - z_2} - \dfrac{y_2 z_2 - y_3 z_3}{z_2 - z_3}}{\dfrac{y_1 - y_2}{z_1 - z_2} - \dfrac{y_2 - y_3}{z_2 - z_3}}}$$

das heißt eine Abhängigkeit von y als Funktion von $y_1$, $y_2$, $y_3$, $z_1$, $z_2$, $z_3$..Nach Multiplizierung mit dem Wert $\tau$ ergibt sich eine unmittelbare Abhängigkeit von Td als Funktion von $\tau$ nach Maßgabe von Gleichung

(13)  $t_D \approx \tau \cdot a \dfrac{z - b}{z - c}$

Das bedeutet, daß die Zeitspanne definiert ist in Abhängigkeit von der Zeitkonstante und nach Kenntnis des ungefähren Verlaufs der Beziehung gemäß Gleichung

(13)  $t_D \approx \tau \cdot a \dfrac{z - b}{z - c}$

die Zeitspanne Td hinreichend genau bestimmbar ist. Bei dieser Gleichung handelt es sich nur um Differenz- beziehungsweise Summenbildung, Multiplikation und Division, Rechenoperationen, die von jedem Mikroprozessor durchführbar sind, und zwar ohne erheblichen Aufwand. Hierbei muß berücksichtigt werden, daß die Werte von a bis c gemäß Gleichungen (9) bis (11) nur ein einziges Mal zu berechnen sind, da die Funktion über Gleichung (3) festliegt.

Joh. Vaillant GmbH u. Co

EP 920

1. August 1983

- 1 -

Ansprüche

1. Verfahren zum Steuern der Schnellaufheizung eines Raumes mit einem von einer Wärmequelle gespeisten Heizkörper im Raum, dadurch gekennzeichnet, daß auf den Sollwert der Temperatur des Heizkörpers ein Festwert aufgeschlagen wird und daß die Zeitdauer des Voreinschaltens der Wärmequelle auf den neuen Sollwert nach der Beziehung

$$(2) \quad t = - \tau \ln \left( 1 - \frac{\vartheta_R}{\vartheta_{R\ddot{u}} - \vartheta_R} \right)$$

ermittelt wird, wobei $\tau$ die Zeitkonstante, $\vartheta_R$ ein konstanter Raumtemperaturwert und $\vartheta_{R\ddot{u}} - \vartheta_{RS}$ eine Temperaturdifferenz darstellen.

2. Verfahren zum Steuern der Schnellaufheizung eines Raumes mit einem von einer Wärmequelle gespeisten Heizkörper im Raum, dadurch gekennzeichnet, daß

- 2 -

- 2 -

0104361

bei Nichterreichen des Festwertes der noch mögliche Festwert addiert wird und die Zeitdauer des Voreinschaltens der Wärmequelle auf den neuen Sollwert nach der Beziehung

$$(4) \quad y = \frac{t_D}{\tau} = \ln \left( 1 + \frac{\vartheta_{RS} - \vartheta_R}{\vartheta_{R\ddot{u}} - \vartheta_{RS}} \right)$$

ermittelt wird.

3.  Verfahren nach Anspruch 1 oder 2, dadurch gekennzeichnet, daß die Beziehung wie folgt approximiert wird.

$$(13) \quad t_D = \tau \cdot a \frac{z - b}{z - c}$$

0104361

Fig. 1

Fig. 2

Europäisches
Patentamt

**EUROPÄISCHER RECHERCHENBERICHT**

| | EINSCHLÄGIGE DOKUMENTE | | | |
|---|---|---|---|---|
| Kategorie | Kennzeichnung des Dokuments mit Angabe, soweit erforderlich, der maßgeblichen Teile | | Betrifft Anspruch | KLASSIFIKATION DER ANMELDUNG (Int. Cl. ³) |
| A | DE-A-2 939 719 (KIEBACK & PETER GMBH & CO KG) * Patentanspruch 1 * | | 1 | G 05 D 23/19 F 24 D 19/10 |
| | --- | | | |
| A | DE-A-3 042 970 (B. KLUGE) | | | |
| | --- | | | |
| A | DE-A-2 908 147 (LGZ LANDIS & GYR ZUG AG) * Seiten 4, 11 * | | 1 | |
| | ----- | | | |
| | | | | RECHERCHIERTE SACHGEBIETE (Int. Cl. ³) |
| | | | | G 05 D 23/00 F 24 D 19/00 |

Der vorliegende Recherchenbericht wurde für alle Patentansprüche erstellt.

| Recherchenort BERLIN | Abschlußdatum der Recherche 29-11-1983 | Prüfer BEYER F |
|---|---|---|